# EUROPÄISCHE PATENTSCHRIFT

(11) **EP 3 398 809 B1**
(45) Veröffentlichungstag und Bekanntmachung des Hinweises auf die Patenterteilung: **14.04.2021**
(21) Anmeldenummer: 18170333.1
(22) Anmeldetag: 02.05.2018
(51) Int. Cl.: B60P 1/00, B60P 1/36

(54) **LANDWIRTSCHAFTLICHER TRANSPORTWAGEN UND VERFAHREN ZUM BETREIBEN DESSELBEN**
AGRICULTURAL TRANSPORT VEHICLE AND METHOD FOR OPERATING THE SAME
CHARIOT TRANSPORTEUR AGRICOLE ET PROCÉDÉ DE FONCTIONNEMENT DUDIT CHARIOT TRANSPORTEUR AGRICOLE

(30) Priorität: 04.05.2017 DE 102017109581
(43) Veröffentlichungstag der Anmeldung: 07.11.2018
(73) Patentinhaber: CLAAS Saulgau GmbH, 88348 Bad Saulgau (DE)
(72) Erfinder: Sauter, Stefan, 88529 Zwiefalten (DE)

(56) Entgegenhaltungen:
- DE-A1-102013 005 842
- DE-U1- 29 719 875
- FR-A1- 2 823 493
- US-A- 4 568 237

## Beschreibung

Die Erfindung betrifft einen landwirtschaftlichen Transportwagen und ein Verfahren zum Betreiben desselben.

DE 297 19 875 U1 offenbart eine Endladeklappe, an einem kippbaren Laderaum für Schüttgüter, die beim Kippvorgang hydraulisch angetrieben, öffnet und schließt, wobei die Ölströme zur Betätigung von Entladeklappe und Kippvorgang voneinander getrennt und nacheinander fließen, und ein Ventilblock die Umschaltung über einen Taster selbsttätig steuert.

Aus FR 2 823 493 A1 ist eine hydraulische und elektropneumatische Vorrichtung zum Steuern des Ladens, Verdichtens und Auswerfens des Inhalts eines mobilen Behälters sowie ein Verfahren zum sequentiellen Betrieb der Vorrichtung bekannt, wobei für die Verdichtung und den Auswurf des Inhalts eine bewegliche Wand vorgesehen ist, die von einem doppeltwirkenden Zylinder bewegt wird und das Auswerfen nur ansteuerbar ist, wenn ein Sensor erkennt, dass eine hintere Tür geöffnet ist FR 2 823 493 A1 offenbart auch dem Oberbegriff des Anspruchs 1.

Ein landwirtschaftlicher Transportwagen verfügt über eine Vielzahl von funktionalen Einrichtungen, die hydraulisch und/oder mechanisch ansteuerbar sind. Zu solchen funktionalen Einrichtungen eines Transportwagens, die hydraulisch ansteuerbar sind, gehören beispielsweise eine Knickdeichsel und/oder eine Laderaumabdeckung und/oder eine Heckklappe und/oder eine vorzugsweise als Kratzboden oder Rollboden oder Abschiebeschild ausgebildete Entladeeinrichtung und/oder eine Lenkachse.

Dann, wenn der Transportwagen als Ladewagen ausgebildet ist, weist derselbe als weitere hydraulisch und/oder mechanisch ansteuerbare funktionale Einrichtung ein Ladeaggregat auf.

Dann, wenn ein landwirtschaftlicher Transportwagen von einem Zugfahrzeug zu ziehen ist, müssen die hydraulisch ansteuerbaren, funktionalen Einrichtungen des Transportwagens ausgehend vom Zugfahrzeug über hydraulische Steuergeräte des Zugfahrzeugs angesteuert werden, wozu infolge der Vielzahl von funktionalen Einrichtungen des Transportwagens eine Vielzahl von hydraulischen Steuergeräten des Zugfahrzeugs erforderlich ist.

Verfügt ein Transportwagen als funktionale Einrichtungen zum Beispiel über eine Knickdeichsel, eine als Kratzboden ausgebildete Entladeeinrichtung, eine Heccklappe, eine Lenkachse und eine Laderaumabdeckung, so sind zur Ansteuerung dieser fünf funktionalen Einrichtungen fünf hydraulische Steuergeräte am Zugfahrzeug erforderlich, nämlich zur Ansteuerung von Knickdeichsel, Entladeeinrichtung, Heckklappe und Laderaumabdeckung jeweils doppelwirkende Steuergeräte und zur Ansteuerung der Lenkachse ein einfachwirkendes Steuergerät. Zugfahrzeuge einfacherer oder älterer Bauart verfügen ggf. nicht über eine ausreichende Anzahl an insbesondere doppelwirkenden Steuergeräten, um sämtliche hydraulisch anzusteuernden, funktionalen Einrichtungen eines Transportwagens tatsächlich vom Zugfahrzeug aus ansteuern zu können.

Es besteht daher Bedarf an einem landwirtschaftlichen Transportwagen und einem Verfahren zum Betreiben eines solchen landwirtschaftlichen Transportwagens, mit Hilfe deren es möglich ist, dann, wenn die Anzahl der am Zugfahrzeug zur Verfügung stehenden hydraulischen Steuergeräte beschränkt ist, mehr funktionale Einrichtungen des Transportwagens ansteuern zu können, als entsprechende Steuergeräte am Zugfahrzeug zur Verfügung stehen. Hiervon ausgehend liegt der vorliegenden Erfindung die Aufgabe zugrunde, einen neuartigen landwirtschaftlichen Transportwagen und ein Verfahren zum Betreiben desselben zu schaffen.

Diese Aufgabe wird durch einen neuartigen landwirtschaftlichen Transportwagen nach Anspruch 1 gelöst. Der erfindungsgemäße Transportwagen weist für den Heckklappenaktuator und die Entladeeinrichtungsaktuator ein gemeinsames Hydraulikmodul und einen Heckklappensensor auf, in Abhängigkeit derer der Entladeeinrichtungsaktuator der Entladeeinrichtung derart betreibbar ist, dass der Entladeeinrichtungsaktuator dann vom Hydraulikmodul antreibbar ist, wenn der Heccklappensensor eine definierte Öffnungsstellung der Heckklappe detektiert. Mit der hier vorliegenden Erfindung wird ein Transportwagen vorgeschlagen, dessen Heckklappe und Entladeeinrichtung ein gemeinsames Hydraulikmodul nutzen, um diese beiden funktionalen Einrichtungen ausgehend von einem gemeinsamen, doppelwirkenden Steuergerät des Zugfahrzeugs aus ansteuern und damit betreiben zu können. Hierzu verfügt der erfindungsgemäße Transportwagen nicht nur über das für die Heckklappe und die Entladeeinrichtung gemeinsame Hydraulikmodul, sondern vielmehr auch über den Heckklappensensor. In Abhängigkeit des Signals des Heckklappensensors steuert das Hydraulikmodul die Heckklappe und/oder die Entladeeinrichtung an. Die Erfindung ermöglicht es, mehr hydraulisch ansteuerbare, funktionale Einrichtungen eines Transportwagens zu betreiben als an einem Zugfahrzeug Steuergeräte zur Verfügung stehen.

Nach der Erfindung sind im Heckbereich des Laderaums Dosierwalzen angeordnet, wobei ein Drehzahlsensor die Drehzahl der Dosierwalzen überwacht, und wobei der Entladeeinrichtungsaktuator vom Hydraulikmodul derart ansteuerbar ist, dass der Entladeeinrichtungsaktuator dann antreibbar ist, wenn der Heccklappensensor die definierte Öffnungsstellung der Heckklappe detektiert und wenn weiterhin der Drehzahlsensor eine definierte Drehzahl der Dosierwalzen detektiert. Diese Weiterbildung ist dann von Vorteil, wenn der landwirtschaftliche Transportwagen über Dosierwalzen verfügt.

Nach einer Weiterbildung ist das Hydraulikmodul über Hydraulikleitungen an ein doppelwirkendes Hydrauliksteuergerät eines Zugfahrzeugs ankoppelbar, wobei der Heckklappenaktuator und der Entladeeinrichtungsaktuator beide über entsprechende Hydraulikleitungen an das gemeinsame Hydraulikmodul gekoppelt sind. Das Hydraulikmodul dient der Ansteuerung des Heckklappenaktuators sowie Entladeeinrichtungsaktuators jeweils ausgehend von einem gemeinsamen Steuergerät des Zugfahrzeugs.

Nach einer Weiterbildung verriegelt dann, wenn der Heckklappensensor die definierte Öffnungsstellung der Heckklappe detektiert, das Hydraulikmodul den Heccklappenaktuator und damit die Heckklappe hydraulisch, wobei dann, wenn der Heckklappensensor die definierte Öffnungsstellung der Heckklappe nicht detektiert, das Hydraulikmodul den Heckklappenaktuator und damit die Heckklappe hydraulisch entriegelt. Dann, wenn die Entladeeinrichtung angetrieben wird, ist die Heckklappe durch das Hydraulikmodul hydraulisch verriegelt, sodass bei angetriebener Entladeeinrichtung die Öffnungsstellung der Heckklappe erhalten bleibt. Nach einer Weiterbildung weist der Transportwagen eine Reversiereinrichtung zur Umkehrung einer Bewegungsrichtung der Entladeeinrichtung auf. Hiermit kann die Bewegungsrichtung der Entladeeinrichtung vorteilhaft umgekehrt werden.

Nach einer Weiterbildung weist der Transportwagen ein Druckbegrenzungsventil auf, welches bei Überschreiten eines Drucks am Heckklappenaktuator öffnet, um die Heckklappe in Schließrichtung aus der definierten Öffnungsposition heraus zu verlagern und abhängig vom Heckklappensensor die Heckklappe hydraulisch zu entriegeln. Hiermit kann die Heckklappe zuverlässig geschlossen werden.

Das Verfahren zum Betreiben des Transportwagens ist in Anspruch 8, Anspruch 9 und Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1: eine stark schematisierte Ansicht eines ersten landwirtschaftlichen Transportwagens;
- Fig. 2: steuerungsseitige Details des Transportwagens der Fig. 1;
- Fig. 3: eine stark schematisierte Ansicht eines zweiten, erfindungsgemäßen landwirtschaftlichen Transportwagens;
- Fig. 4: steuerungsseitige Details des Transportwagens der Fig. 3; und
- Fig. 5: ein weiteres Detail des Transportwagens der Fig. 3.

Die Erfindung betrifft einen landwirtschaftlichen Transportwagen und ein Verfahren zum Betreiben eines solchen Transportwagens.

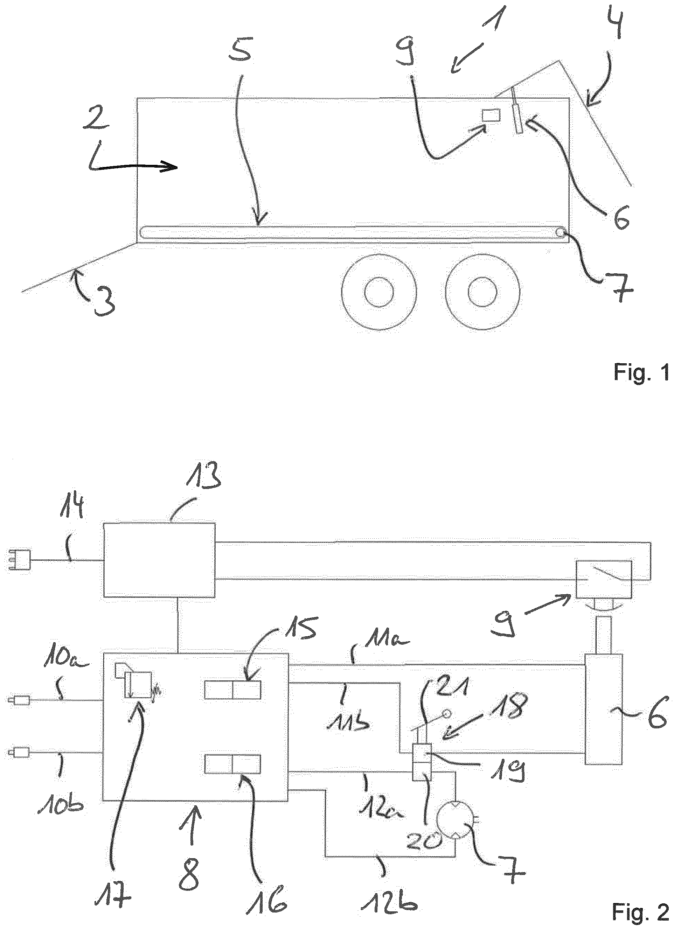

Fig. 1 zeigt stark schematisiert einen landwirtschaftlichen Transportwagen 1, wobei der Transportwagen 1 einen Laderaum 2 umfasst. Im Laderaum 2 kann Erntegut aufgenommen werden. Der Transportwagen 1 der Fig. 1 verfügt weiterhin über eine Knickdeichsel 3, eine Heckklappe 4 sowie eine als Kratzboden ausgebildete Entladeeinrichtung 5. Die Heckklappe 4 ist an einem Heckbereich des Laderaums 2 positioniert. Die als Kratzboden ausgebildete Entladeeinrichtung 5 verläuft im Bereich des Laderaums 2, nämlich benachbart zu einer Bodenwand desselben. Es sei an dieser Stelle darauf hingewiesen, dass die Entladeeinrichtung 5 nicht zwangsweise als Kratzboden ausgebildet sein muss. Die Entladeeinrichtung 5 kann auch von einem Rollboden oder einem Abschieber bereitgestellt sein. Bei Heckklappe 4 und Entladeeinrichtung 5 handelt es sich um hydraulisch ansteuerbare, funktionale Einrichtungen des Transportwagens.

Die Heckklappe 4 kann mithilfe eines hydraulischen Heckklappenaktuators 6 zwischen einer Schließstellung und einer Öffnungsstellung verlagert werden. Die Entladeeinrichtung 5 ist von einem hydraulischen Entladeeinrichtungsaktuator 7 antreibbar. Beim Heckklappenaktuator 6 handelt es sich vorzugsweise um einen Hydraulikzylinder, beim Entladeeinrichtungsaktuator 7 um einen hydraulisch angetriebenen Motor.

Die Entladeeinrichtung 5 kann alternativ mechanisch, d.h. durch eine Zapfwelle eines Zugfahrzeugs, angetrieben und hydraulisch oder elektrisch angesteuert werden.

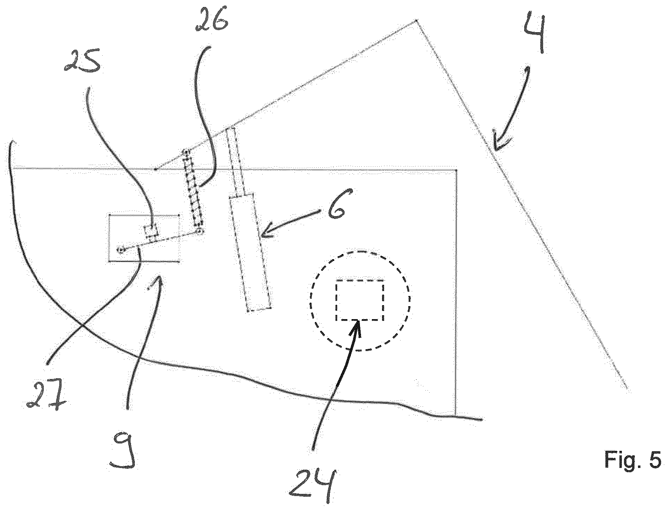

Beim Transportwagen 1 ist für die Heckklappe 4 und die Entladeeinrichtung 5 ein gemeinsames Hydraulikmodul 8 vorhanden, von dem aus die Heckklappe 4, nämlich der Heckklappenaktuator 6, sowie die Entladeeinrichtung 5, nämlich der Entladeeinrichtungsaktuator 7, ansteuerbar sind, nämlich derart, dass der Entladeeinrichtungsaktuator 7 dann antreibbar ist, wenn ein Heccklappensensor 9, der vorzugsweise als Heckklappenschalter 25 ausgebildet ist (siehe Fig. 5), eine definierte Öffnungsstellung der Heckklappe 4 detektiert.

Die Bewegung der Heckklappe 4 ist über ein Koppelglied 26 an einen Schwenkhebel 27 übertragbar, welcher den Heckklappenschalter 25 abhängig von der Stellung der Heckklappe 4 betätigt. Der Schwenkhebel 27 ist um ein erstes Ende schwenkbar, an einem gegenüberliegenden zweiten Ende greift das Koppelglied 26 an, welches auch an der Heckklappe 4 angreift.

Fig. 2 zeigt Details dieses für Heckklappenaktuator 6 und Entladeeinrichtungsaktuator 7 gemeinsamen Hydraulikmoduls 8. Gemäß Fig. 2 ist das Hydraulikmodul 8 über Hydraulikleitungen 10a, 10b an ein doppelwirkendes, nicht gezeigtes Hydrauliksteuergerät eines Zugfahrzeugs ankoppelbar. Der Heckklappenaktuator 6 der Heckklappe 4 ist über Hydraulikleitungen 11a, 11b und der Entladeeinrichtungsaktuator 7 der Entladeeinrichtung 5 über Hydraulikleitungen 12a, 12b an das gemeinsame Hydraulikmodul 8 gekoppelt.

Fig. 2 zeigt weiterhin, dass mit dem Hydraulikmodul 8 eine Strom- bzw. Spannungsversorgungs- sowie Steuerungseinrichtung 13 zusammenwirkt, die über ein elektrisches Kabel 14 an einen elektrischen Strom- bzw. Spannungsversorgungsanschluss des Zugfahrzeugs anbindbar ist. Die Strom- bzw. Spannungsversorgungs- und Steuerungseinrichtung 13 versorgt einerseits das Hydraulikmodul 8 und andererseits den Heckklappensensor 9 mit elektrischem Strom bzw. elektrischer Spannung und/oder mit elektrischen Steuersignalen.

Fig. 2 zeigt als Baugruppen des für die Heckklappe 4 und die Entladeeinrichtung 5, nämlich den Heckklappenaktuator 6 und den Entladeeinrichtungsaktuator 7, gemeinsamen Hydraulikmoduls 8 elektrohydraulische Schaltventile 15, 16, wobei das Schaltventil 15 mit dem Heckklappenaktuator 6 und das Schaltventil 16 mit dem Entladeeinrichtungsaktuator 7 zusammenwirkt.

Weiterhin zeigt Fig. 2 ein Druckbegrenzungsventil 17.

Darüber hinaus zeigt Fig. 2 eine Reversiereinrichtung 18 mit Reversierventilen 19, 20 und eine Betätigungseinrichtung 21 zur Betätigung der Reversiereinrichtung 18. Das Reversierventil 19 ist in die Hydraulikleitung 11b geschaltet, welche den Heckklappenaktuator 6 mit dem Hydraulikmodul 8 koppelt, wohingegen das Reversierventil 20 in die Hydraulikleitung 12a geschaltet ist, welche den Entladeeinrichtungsaktuator 7 an das Hydraulikmodul 8 koppelt.

Wie bereits ausgeführt, sind die Heckklappe 4 und die Entladeeinrichtung 5, nämlich der Heckklappenaktuator 6 und die Entladeeinrichtungsaktuator 7, ausgehend vom gemeinsamen Hydraulikmodul 8 aus ansteuerbar, und zwar in Abhängigkeit des Heckklappensensors 9. In Abhängigkeit des Heckklappensensors 9 sind Heckklappenaktuator 6 und Entladeeinrichtungsaktuator 5 derart ansteuerbar, dass die Entladeeinrichtung 5 über den Entladeeinrichtungsaktuator 7 ausschließlich dann antreibbar ist, wenn der Heckklappensensor 9 eine definierte Öffnungsstellung der Heckklappe 4 detektiert.

Dann, wenn der Heckklappensensor 9 die definierte Öffnungsstellung der Heccklappe 4 detektiert, verriegelt das Hydraulikmodul 8 die Heckklappe 4, nämlich den Heckklappenaktuator 6, elektrohydraulisch, sodass dann die Öffnungsstellung der Heckklappe unverändert bleibt, d.h. in dieser Öffnungsstellung fixiert ist. Bei unveränderter Öffnungsstellung der Heckklappe 4 kann dann die Entladeeinrichtung 5, nämlich der Entladeeinrichtungsaktuator 7, ausgehend vom Hydraulikmodul 8 aus angetrieben werden.

Der Heckklappensensor 9 ist so gestaltet oder angeordnet, dass der Öffnungswinkel der Heckklappe 4 einstellbar ist, d.h. dass die Öffnungsstellung der Heckklappe 4 in beliebiger Position zwischen geschlossener Position und maximaler Öffnung verriegelt werden kann. Bei Seitenwind kann die Heckklappe 4 somit in einem geringen Öffnungswinkel verriegelt werden, so dass das zu entladende Gut direkt nach unten abgeleitet wird. Dies ist besonders vorteilhaft bei Transportwagen, die mit Dosierwalzen ausgestattet sind. Beim Entladen auf einem Silo können dadurch Verluste durch vom Wind verwehtes Erntegut minimiert werden.

Dann, wenn der Heckklappensensor 9 die definierte Öffnungsstellung der Heccklappe 4 nicht detektiert, entriegelt das Hydraulikmodul 8 die Heckklappe 4, nämlich den Heckklappenaktuator 6, elektrohydraulisch, sodass dann die Stellung der Heckklappe 4 vom Heckklappenaktuator 6 verändert werden kann.

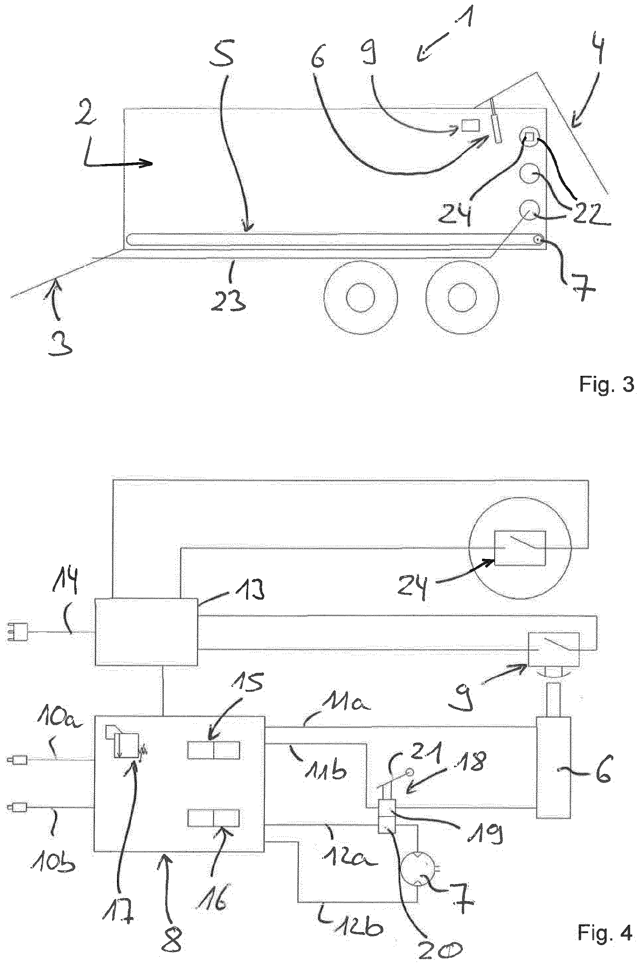

Fig. 3 und 4 zeigen erfindungsgemäße Weiterbildungen des Transportwagens der Fig. 1 und 2, wobei der Transportwagen1 der Fig. 3 und 4 im Heckbereich des Laderaums 2 Dosierwalzen 22 aufweist.

Die Dosierwalzen 22 sind über eine Antriebswelle 23 antreibbar, nämlich mechanisch gekoppelt an eine Zapfwelle des Zugfahrzeugs.

Ein Drehzahlsensor 24 ist am Transportwagen 1 verbaut, der gemäß Fig. 2, ausgehend von der Stromversorgungseinrichtung 13 mit elektrische Spannung bzw. elektrischem Strom versorgt werden kann. Der Drehzahlsensor 24 überwacht die Drehzahlen der Dosierwalzen 22. Der Drehzahlsensor 24 ist vorzugsweise als Drehzahlschalter ausgebildet, der bei Detektion einer vorgebbaren Drehzahl schaltet und damit einen Stromkreis schließt und solange geschlossen hält bis die Schalt-Drehzahl unterschritten wird. Die Schalt-Drehzahl kann vorzugsweise eingestellt werden.

Beim Transportwagen 1 der Fig. 3 und 4 ist vorgesehen, dass der Drehzahlsensor 24 die Drehzahl der Dosierwalzen 22 überwacht, und dass der Heckklappenaktuator 6 sowie der Entladeeinrichtungsaktuator 7 vom gemeinsamen Hydraulikmodul 8 aus derart ansteuerbar sind, dass die Entladeeinrichtung 5 über den Entladeeinrichtungsaktuator 7 ausgehend vom Hydraulikmodul 8 ausschließlich dann antreibbar ist, wenn einerseits der Heckklappensensor 9 die definierte Öffnungsstellung der Heckklappe 4 detektiert, und wenn weiterhin andererseits der Drehzahlsensor 24 eine definierte Drehzahl der Dosierwalzen 22 detektiert.

Im Nachfolgenden werden bevorzugte erfindungsgemäße Verfahren für den obigen erfindungsgemäßen Transportwagen 1 beschrieben.

Als erstes erfindungsgemäßes Verfahren wird ein Entladevorgang für den Transportwagen 1 beschrieben, wenn ausgehend von einem Zustand, in welchem die Heckklappe 4 geschlossen ist und die Entladeeinrichtung 5 nicht angetrieben ist, zum Beispiel durch bedienerseitige bzw. fahrerseitige Betätigung eines doppelwirkenden Steuergeräts des Zugfahrzeugs bzw. Schleppers bedienerseitig bzw. fahrerseitig ein Entladevorgang steuerungsseitig ausgelöst wird.

Das mit dem Heckklappenaktuator 6 zusammenwirkende Schaltventil 15 ist in diesem Zustand geöffnet, das mit dem des Entladeeinrichtungsaktuator 7 zusammenwirkende Schaltventil 16 ist in diesem Zustand geschlossen.

Dann, wenn durch Betätigung des doppelwirkenden Steuergeräts des Zugfahrzeugs bei geschlossenem Schaltventil 16 und geöffnetem Schaltventil 15 ein Entladevorgang ausgelöst wird, wird bedingt durch das geöffnete Schaltventil 15, welches mit dem Heckklappenaktuator 6 zusammenwirkt, zunächst der Heckklappenaktuator 6 vom Hydraulikmodul 8 aus angetrieben, nämlich zum Öffnen der Heccklappe 4, wohingegen der Entladeeinrichtungsaktuator 7 vom Hydraulikmodul 8 nicht angetrieben wird, sodass dann die Entladevorrichtung 5 zunächst stillsteht. Die Heckklappe 4 wird so lange über den Heckklappenaktuator 6 geöffnet, bis der Heckklappensensor 9 eine definierte Öffnungsstellung der Heckklappe 4 detektiert. Im gezeigten Ausführungsbeispiel wird dann, wenn die Heckklappe 4 diese definierte Öffnungsstellung erreicht, der als Heckklappenschalter 25 ausgebildete Heckklappensensor 9 betätigt, wobei dann infolge der Betätigung des Heckklappenschalters 25 das mit dem Heckklappenaktuator 6 zusammenwirkende Schaltventil 15 bestromt wird und so dieses Schaltventil 15 geschlossen wird, wodurch die Heckklappe 4 nicht weiter geöffnet wird, sondern vielmehr der Öffnungsvorgang der Heckklappe 4 beendet wird.

Mit dem Bestromen des mit dem Heckklappenaktuator 6 zusammenwirkenden Schaltventils 15 wird dasselbe geschlossen und hierdurch der Heckklappenaktuator 6 hydraulisch verriegelt, sodass die Heckklappe 4 in ihrer erreichten Öffnungsstellung verbleibt und demnach hydraulisch verriegelt ist. Über den Heckklappensensor 9 bzw. Heckklappenschalter 25 kann dieser definierte Öffnungsgrad bzw. die Öffnungsstellung bzw. der Öffnungswinkel der Heckklappe 4 eingestellt werden. So kann z. B. über den Heckklappensensor 9 eine Öffnungsstellung der Heckklappe 4 eingestellt werden, in welcher dieselbe beim Entladen als Windstopper fungiert, um Erntegutverluste bei Seitenwind zu reduzieren. Das wirkt besonders vorteilhaft, wenn ein Transportwagen mit Dosierwalzen ausgestattet ist.

Dann, wenn wie in Fig. 1 und 2 gezeigt, ein nicht erfindungsgemäßer Transportwagen 1 keine Dosierwalzen 22 aufweist, wird unmittelbar mit oder nach Erreichen der definierten Öffnungsstellung der Heckklappe 4 und demnach mit dem Bestromen und Schließen des mit dem Heckklappenaktuator 6 zusammenwirkenden Schaltventils 15 die Entladeeinrichtung 5 bzw. der Entladeeinrichtungsaktuator 7 über das Hydraulikmodul 8 angetrieben, wozu das mit dem Entladeeinrichtungsaktuator 7 zusammenwirkende Schaltventil 16 dasselbe bestromt und demnach geöffnet wird.

Dann hingegen, wenn, wie in Fig. 3 und 4 gezeigt, der erfindungsgemäße Transportwagen 1 im Heckbereich die Dosierwalzen 22 aufweist, wird dann, wenn die Heckklappe 4 die definierte Öffnungsstellung erreicht hat und der Heckklappensensor 9 dies detektiert, mit oder nach Detektieren der definierten Öffnungsstellung der Heckklappe 4 durch den Heckklappensensor 9 die Dosierwalze 22 angetrieben, nämlich über die Antriebswelle 23 nach entsprechender Betätigung durch den Bediener. Hierbei überwacht dann der Drehzahlsensor 24, ob die Dosierwalzen 22 die definierte Drehzahl erreichen, wobei dann, wenn der Drehzahlsensor 24 die definierte Drehzahl der Dosierwalzen 22 detektiert, der Drehzahlsensor 24 dem Hydraulikmodul 8 ein entsprechendes Signal bereitstellt, auf Grundlage dessen dann das mit dem Entladeeinrichtungsaktuator 7 zusammenwirkende Schaltventil 16 bestromt und hierdurch geöffnet wird, sodass dann nachfolgend die Entladeeinrichtung 5 über den Entladeeinrichtungsaktuator 7 ausgehend vom Hydraulikmodul 8 angetrieben wird.

Beim Entladevorgang für den Transportwagen 1 der Fig. 1 und 2, der keine Dosierwalzen aufweist, wird demnach die Bewegung der Entladeeinrichtung 5 dann gestartet, wenn der Heckklappensensor 9 die definierte Öffnungsstellung der Heckklappe 4 detektiert. Beim erfindungsgemäßen Transportwagen 1 der Fig. 3 und 4 hingegen wird die Entladeeinrichtung 5 erst dann in Bewegung gesetzt, wenn erstens der Heccklappensensor 9 die definierte Öffnungsstellung der Heckklappe 4 detektiert und wenn zweitens der Drehzahlsensor 24 detektiert, dass die Dosierwalzen 22 die definierte Drehzahl erreicht haben.

Unabhängig davon, ob nun der Transportwagen 1 Dosierwalzen 22 aufweist oder nicht, bleibt während des eigentlichen Entladevorgangs des Transportwagens 1 über die Entladeeinrichtung 5 die Heckklappe 4 in ihrer definierten Öffnungsstellung hydraulisch verriegelt, nämlich durch Schließen des mit dem Heckklappenaktuator 6 zusammenwirkenden Schaltventils 15.

Dann, wenn also mit Hilfe des Hydraulikmoduls 8 die Entladeeinrichtung 5 über den Entladeeinrichtungsaktuator 7 angetrieben wird, ist bei geschlossenem Schaltventil 15 die Heckklappe 4 bzw. der Heckklappenaktuator 6 hydraulisch verriegelt.

Sinkt die Heckklappe 4 zum Beispiel bei einer Undichtigkeit am Heckklappenaktuator 6 ab und verlässt ihre definierte Öffnungsstellung, dann detektiert dies der als Heckklappenschalter 25 ausgebildete Heckklappensensor 9, sodass dann das Schaltventil 15 wieder geöffnet und das Schaltventil 16 wieder geschlossen wird und so die Entladeeinrichtung 5 stehen bleibt. Die Heckklappe 4 wird wieder bis zur definierten Öffnungsstellung geöffnet, wobei die Entladeeinrichtung 5 nach Erreichen dieser definierten Öffnungsstellung wieder angetrieben wird, und zwar durch entsprechende Ansteuerung der Schaltventile 15, 16, abhängig vom Signal des Heckklappensensors 9.

Nachfolgend wird ein Verfahren zum Betreiben des Transportwagens 1 der Fig. 1, 2 bzw. des Transportwagens 1 der Fig. 3, 4 beschrieben, wenn bei geöffneter Heckklappe 4 der Entladevorgang beendet wird, wenn also zum Beenden eines Entladevorgangs eine laufende bzw. betriebene Entladeeinrichtung 5 stillgesetzt und die geöffnete Heckklappe 4 geschlossen werden soll.

Im Ausgangszustand bei der Beendigung eines Entladevorgangs ist die Heckklappe 4 geöffnet, und zwar bis zur definierten Öffnungsstellung, sodass bei Detektion der definierten Öffnungsstellung durch den Heckklappensensor 9 das mit dem Heckklappenaktuator 6 zusammenwirkende Schaltventil 15 bestromt und geschlossen und hierdurch die Heckklappe 4 bzw. der Heckklappenaktuator 6 hydraulisch verriegelt ist.

Bei einem erfindungsgemäßen Transportwagen 1 mit Dosierwalzen 22 (siehe Fig. 3 und 4) werden zur Beendigung des Entladevorgangs die Dosierwalzen 22 bedienerseitig stillgesetzt, wobei dann die Drehzahl der Dosierwalzen 22 abfällt und der Drehzahlsensor 24 nicht mehr das Vorliegen der definierten Drehzahl detektiert, sodass dann das mit dem Entladeeinrichtungsaktuator 7 zusammenwirkende Schaltventil 16 nicht mehr bestromt und nicht mehr geöffnet ist, sodass dann die Entladeeinrichtung 5 nicht mehr angetrieben wird, sondern stehen bleibt.

Bei einem Transportwagen 1 ohne Dosierwalzen 22 (siehe Fig. 1 und 2) läuft die Entladungsvorrichtung 5 zunächst solange weiter, bis bedienerseitig das doppelwirkende Steuergerät in eine Neutralstellung überführt wird.

Anschließend an das Stillsetzen der Entladeeinrichtung 5 bzw. des Entladeeinrichtungsaktuators 7 wird nachfolgend die Heckklappe 4 geschlossen, und zwar dadurch, dass bei noch hydraulisch verriegelter Heckklappe 4 durch bedienerseitiges Ansteuern des doppelwirkenden Steuergeräts des Zugfahrzeugs an dem Heckklappenaktuator 6 ein Druck aufgebaut wird, und zwar bis das Druckbegrenzungsventil 17, welches mit dem Heckklappenaktuator 6 zusammenwirkt, öffnet, wobei hierdurch die Heckklappe 4 aus ihrer definierten Öffnungsstellung heraus in Schließstellung verlagert wird und dann abhängig vom Heckklappensensor 9 das Hydraulikmodul 8 die Heckklappe 4 hydraulisch entriegelt, nämlich durch Wegfall der Bestromung des mit dem Heckklappenaktuator 6 zusammenwirkenden Schaltventils 15 und demnach durch Öffnen des Schaltventils 15.

Um nach dem Stillsetzen des Entladeeinrichtungsaktuators 7 die Heckklappe 4 zu schließen, wird das doppelwirkende Steuergerät des Zugfahrzeugs in Neutralstellung überführt und aus der Neutralstellung heraus in eine Betätigungsstellung gebracht, in welcher die Hydraulikströmungsrichtung umgekehrt wird.

Ein Systemdruck des Zugfahrzeugs baut hierbei Druck am Heckklappenaktuator 6 auf, und zwar vorzugsweise an einer Stangenseite des als Hydraulikzylinder ausgebildeten Heckklappenaktuators 6. Durch diese Druckbeaufschlagung auf der Stangenseite steigt auch der Druck an einer gegenüberliegenden Kolbenseite des als Hydraulikzylinder ausgebildeten Heckklappenaktuators 6.

Dann, wenn der Druck einen Grenzwert übersteigt, öffnet das Druckbegrenzungsventil 17, welches mit dem Heckklappenaktuator 6 kolbenseitig zusammenwirkt, sodass der Entleerungsvorgang des Heckklappenaktuators 6 kolbenseitig beginnt.

Hierbei wird dann die Heckklappe 4 aus ihrer definierten Öffnungsstellung heraus in Schließrichtung verlagert und der Heckklappensensor 9 detektiert nicht mehr das Vorliegen der definierten Öffnungsstellung für die Heckklappe 4, sodass dann das mit dem Heckklappenaktuator 6 zusammenwirkende Schaltventil 15 nicht mehr bestromt wird und nicht mehr geschlossen bleibt, sondern vielmehr geöffnet wird. Dadurch fällt der Druck an der Kolbenseite - des als Hydraulikzylinder ausgebildeten - Heckklappenaktuators 6 ab und das Druckbegrenzungsventil 17 schließt.

Die Heckklappe 4 kann dann nachfolgend drucklos in die Schließstellung überführt werden.

Falls statt des beschriebenen Hydraulikzylinders ein Zylinder anderer Bauart - wie beispielsweise ein doppelwirkender Zugzylinder - eingesetzt wird, müssten lediglich die Anschlüsse entsprechend getauscht werden.

Zum Schließen der Heckklappe 4 nach dem Stillsetzen der Entladeeinrichtung 5 bei der Beendigung eines Entladevorgangs ist es demnach erforderlich, dass bedienerseitig das doppelwirkende Steuergerät des Zugfahrzeugs, mit welchem das Hydraulikmodul 8 gekoppelt ist, zunächst in die Neutralstellung gebracht und dann in eine zum Start des Entladevorgangs entgegengesetzte Betätigungsstellung überführt wird, um durch Überhöhung des Drucks am Heckklappenaktuator 6 das Druckbegrenzungsventil 17 zu öffnen und so die Heckklappe 4 aus ihrer definierten Öffnungsstellung heraus in Schließrichtung zu bewegen und die hydraulische Verriegelung der Heckklappe 4 aufzulösen.

Das Verfahren zur Beendigung des Entladevorgangs wird vorzugsweise im Anschluss an das Verfahren zur Auslösung eines Entladevorgangs durchgeführt. Ein weiteres Verfahren zum Betreiben des Transportwagens 1 der Fig. 1, 2 oder des erfindungsgemäßen Transportwagens 1 der Fig. 3, 4 betrifft ein sogenanntes Reversieren, wobei unter dem Reversieren eine Umkehr der Bewegungsrichtung der Entladeeinrichtung 5 zu verstehen ist, also im Ausführungsbeispiel der Fig. 1 bis 4 eine Umkehr der Bewegungsrichtung der als Kratzboden ausgebildeten Entladeeinrichtung 5. Eine solche Umkehr der Bewegungsrichtung der Entladeeinrichtung 5 findet insbesondere dann Anwendung, wenn bei einem erfindungsgemäßen Transportwagen mit Dosierwalzen 22 (siehe Fig. 3, 4) eine Blockade der Dosierwalzen 22 während des Entladevorgangs erkannt wird oder wenn beim Starten des Entladevorgangs die Dosierwalzen 22 Anlaufschwierigkeiten haben und ihre definierte Drehzahl nicht erreichen können. Dies kann jeweils mithilfe des Drehzahlsensors 24 erfasst werden, um dann auf Basis des Signals des Drehzahlsensors 24 den Reversiervorgang bzw. die Umkehrung der Bewegungsrichtung der Entladeeinrichtung 5 steuerungsseitig auszulösen.

Um nun die Umkehr der Bewegungsrichtung der Entladeeinrichtung 5 zu bewerkstelligen, werden die Reversierventile 19, 20 der Reversiervorrichtung 18 beide betätigt, vorzugsweise über die Betätigungseinrichtung 21 abhängig vom Signal des Drehzahlsensors 24. Das Reversierventil 19 unterbricht die Hydraulikleitung 11b zum Heckklappenaktuator 6 und verriegelt diesen hydraulisch. Das Reversierventil 20 öffnet die Hydraulikleitung 12a für den Reversierbetrieb, d.h. den Rückwärtslauf, des Entladeeinrichtungsaktuators 7.

Bei der Betätigung der Reversierventile 18, 19 bleibt die Heckklappe 4 hydraulisch verriegelt, und zwar dadurch, dass das mit dem Heckklappenaktuator 6 zusammenwirkende Schaltventil 15 bestromt und damit geschlossen bleibt und zusätzlich das Reversierventil 18 betätigt ist. Der Entladeeinrichtungsaktuator 7 wird bei betätigtem Reversierventil 19 unter Umkehrung der Bewegungsrichtung der Entladeeinrichtung 5 vom Hydraulikmodul 8 aus angetrieben.

Dann, wenn die Heckklappe 4 die definierte Öffnungsstellung einnimmt und durch das oben beschriebene Bestromen bzw. Schließen des Schaltventils 15 hydraulisch verriegelt ist, und wenn über den Drehzahlsensor 24 zum Beispiel eine Blockade der Dosierwalzen 22 bekannt wird, werden die Reversierventile 18, 19 betätigt. Wie bereits ausgeführt, bleibt hierbei die Heckklappe 4 hydraulisch verriegelt. Die Heckklappe 4 bleibt in ihrer Öffnungsstellung stehen. Wurde genügend weit reversiert, also die Entladeeinrichtung 5 ausreichend in entgegengesetzter Bewegungsrichtung angetrieben, so können nachfolgend die Dosierwalzen 22 wieder eingeschaltet werden. Erreichen die Dosierwalzen 22 ihre definierte Drehzahl, erkennt dies der Drehzahlsensor 24, die Entladeeinrichtung 5 kann wiederum in ihrer regulären Bewegungsrichtung für den Entladevorgang angetrieben werden.

Der Entladevorgang kann fortgesetzt werden und die Reversierventile 18, 19 werden wieder deaktiviert.

Die Erfindung ermöglicht es, ausgehend von einem einzigen doppelwirkenden Steuergerät eines Zugfahrzeugs eine hydraulisch zu betätigende Heckklappe 4 und eine hydraulisch zu betätigende Entladeeinrichtung 5 eines Transportwagens zu betätigen. Die Heckklappe 4 bleibt dann, wenn dieselbe eine definierte Öffnungsstellung erreicht hat, hydraulisch verriegelt und somit sicher in ihrer Öffnungsstellung. Bei einem erfindungsgemäßen Transportwagen 1 mit Dosierwalzen 22 kann eine Blockade derselben durch das Reversieren behoben werden. Ein unbeabsichtigtes Starten der Entladeeinrichtung 5 bei Stillstand der Dosierwalzen 22 ist nicht möglich. Bei einer Blockade der Dosierwalzen 22 während des Entladevorgangs bleibt die Entladeeinrichtung 5 stehen.

Die Erfindung stellt eine Art Folgeschaltung bereit, um bei Beginn des Entladevorgangs zunächst die Heckklappe 4 in ihre definierte Öffnungsstellung zu überführen und erst nachfolgend die Entladeeinrichtung 5 anzutreiben. Vorteilhaft kommt die Erfindung bei Transportwagen 1 zum Einsatz, die mit Dosierwalzen 22 ausgestattet sind. Insbesondere bei solchen Transportwagen 1 kann der Entladevorgang beschleunigt werden, da die Abfolge der Funktionen zeitlich optimal nacheinander abläuft, nämlich auch an das Erreichen der definierten Drehzahl für die Dosierwalzen 22 gekoppelt ist.

Dann, wenn bei einem erfindungsgemäßen Transportwagen 1 mit Dosierwalzen 22 eine Entladestrecke in einem Silo, in welchem der Entladevorgang durchgeführt werden soll, kurz ist, wird durch die Erfindung eine komfortable Möglichkeit geschaffen, das Silo mehrfach zu überfahren, und zwar ohne die komplette Funktion des Startens des Entladevorgangs sowie des Beendens des Entladevorgangs mehrfach durchlaufen zu müssen. Ein Bediener muss lediglich nach Überfahren des Silos bei einem Transportwagen 1 mit Dosierwalzen 22 die Dosierwalzen 22 ausschalten. Die abfallende Drehzahl der Dosierwalzen 22 verursacht dann, dass die Entladeeinrichtung 5 nicht weiter angetrieben wird, da der Drehzahlsensor 24 nicht mehr das Vorliegen der definierten Drehzahl detektiert. Die Heckklappe 4 bleibt infolge ihrer Verriegelung geöffnet, Dosierwalzen 22 sowie die Ladeeinrichtung 5 bewegen sich nicht. Will der Bediener den Entladevorgang fortsetzen, so muss er lediglich die Dosierwalzen 22 wieder einschalten und die Entladeeinrichtung 5 beginnt dann automatisch zu laufen, wenn der Drehzahlsensor 24 detektiert, dass die Dosierwalzen 22 ihre definierte Drehzahl wieder erreicht haben.

Die Entladeeinrichtung 5 kann alternativ mechanisch über die Zapfwelle des Zugfahrzeugs angetrieben werden. Der Entladeeinrichtungsaktuator 7 ist in diesem Fall als hydraulisch betätigbare Kupplung ausgeführt, die vom Hydraulikmodul 8 antreibbar bzw. betätigbar ist. Die Kupplung kann die Antriebsverbindung herstellen sowie trennen und eine Drehrichtungsumkehr bewirken.

### Bezugszeichenliste

- 1: Transportwagen
- 2: Laderaum
- 3: Knickdeichsel
- 4: Heckklappe
- 5: Entladeeinrichtung
- 6: Heckklappenaktuator
- 7: Entladeeinrichtungsaktuator
- 8: Hydraulikmodul
- 9: Heckklappensensor
- 10a: Hydraulikleitung
- 10b: Hydraulikleitung
- 11a: Hydraulikleitung
- 11b: Hydraulikleitung
- 12a: Hydraulikleitung
- 12b: Hydraulikleitung
- 13: Strom- bzw. Spannungsversorgungs- sowie Steuerungseinrichtung
- 14: Kabel
- 15: Schaltventil
- 16: Schaltventil
- 17: Druckbegrenzungsventil
- 18: Reversiereinrichtung
- 19: Reversierventil
- 20: Reversierventil
- 21: Betätigungseinrichtung
- 22: Dosierwalze
- 23: Antriebswelle
- 24: Drehzahlsensor
- 25: Heckklappenschalter
- 26: Koppelglied
- 27: Schwenkhebel

## Patentansprüche

1. Landwirtschaftlicher Transportwagen (1),
mit einem Laderaum (2),
mit einer an einem Heckbereich des Laderaums (2) positionierten Heckklappe (4) und einem hydraulischen Heckklappenaktuator (6) zum Verstellen der Heckklappe (4),
mit einer, insbesondere als Kratzboden oder Rollboden oder Abschieber ausgebildeten Entladeeinrichtung (5) und einem Entladeeinrichtungsaktuator (7) zum Antreiben der Entladeeinrichtung (5),
mit einem für den Heckklappenaktuator (6) und den Entladeeinrichtungsaktuator (7) gemeinsamen Hydraulikmodul (8) und einen Heckklappensensor (9), in Abhängigkeit dessen der Entladeeinrichtungsaktuator (7) der Entladeeinrichtung (5) derart betreibbar ist, dass der Entladeeinrichtungsaktuator (7) dann vom Hydraulikmodul (8) antreibbar ist, wenn der Heckklappensensor (9) eine definierte Öffnungsstellung der Heckklappe (4) detektiert, **dadurch gekennzeichnet, dass** im Heckbereich des Laderaums (2) Dosierwalzen (22) angeordnet sind, dass ein Drehzahlsensor (24) die Drehzahl der Dosierwalzen (22) überwacht, und dass der Entladeeinrichtungsaktuator (7) vom Hydraulikmodul (8) derart ansteuerbar ist, dass der Entladeeinrichtungsaktuator (7) dann antreibbar ist, wenn der Heckklappensensor (9) die definierte Öffnungsstellung der Heckklappe (4) detektiert und wenn weiterhin der Drehzahlsensor (24) eine definierte Drehzahl der Dosierwalzen (22) detektiert.

2. Transportwagen nach Anspruch 1, **dadurch gekennzeichnet, dass** das für den Heckklappenaktuator (4) der Heckklappe (4) und den Entladeeinrichtungsaktuator (7) der Entladeeinrichtung (5) gemeinsame Hydraulikmodul (8) über Hydraulikleitungen (10a, 10b) an ein doppelwirkendes Steuergerät eines Zugfahrzeugs koppelbar ist.

3. Transportwagen nach einem der Ansprüche 1 bis 2, **dadurch gekennzeichnet, dass** der Heckklappenaktuator (6) und der Entladeeinrichtungsaktuator (7) beide über entsprechende Hydraulikleitungen (11a, 11b, 12a, 12b) an das gemeinsame Hydraulikmodul (8) gekoppelt sind.

4. Transportwagen nach einem der Ansprüche 1 bis 3, **dadurch gekennzeichnet, dass** der Entladeeinrichtungsaktuator (7) ausschließlich dann vom Hydraulikmodul (8) antreibbar ist, wenn der Heckklappensensor (9) die definierte Öffnungsstellung der Heckklappe (4) detektiert, und dass der Heckklappenaktuator (6) ausschließlich dann vom Hydraulikmodul (8) antreibbar ist, wenn der Heckklappensensor (9) die definierte Öffnungsstellung der Heckklappe (4) nicht detektiert.

5. Transportwagen nach einem der Ansprüche 1 bis 4, **dadurch gekennzeichnet, dass** dann, wenn der Heckklappensensor (9) die definierte Öffnungsstellung der Heckklappe (4) detektiert, das Hydraulikmodul (8) den Heckklappenaktuator (4) und damit die Heckklappe (4) hydraulisch verriegelt, und dass dann, wenn der Heckklappensensor (9) die definierte Öffnungsstellung der Heckklappe (4) nicht detektiert, das Hydraulikmodul (8) den Heckklappenaktuator (6) und damit die Heckklappe (4) hydraulisch entriegelt.

6. Transportwagen nach einem der Ansprüche 1 bis 5, **gekennzeichnet durch** eine Reversiereinrichtung (18) zur Umkehrung einer Bewegungsrichtung der Entladeeinrichtung (5).

7. Transportwagen nach einem der vorangehenden Ansprüche, **dadurch gekennzeichnet, dass** der Heckklappensensor (9) so gestaltet oder angeordnet ist, dass der Öffnungswinkel der Heckklappe (4) einstellbar ist.

8. Verfahren zum Betreiben eines Transportwagens (1) nach einem der Ansprüche 1 bis 7, **dadurch gekennzeichnet, dass** dann, wenn bei geschlossener Heckklappe (4) ein Entladevorgang ausgelöst wird,
zunächst der Heckklappenaktuator (6) vom Hydraulikmodul (8) zum Öffnen der Heckklappe (4) angetrieben wird, wohingegen der Entladeeinrichtungsaktuator (7) vom Hydraulikmodul (8) nicht angetrieben wird,
dann, wenn der Heckklappensensor (9) eine definierte Öffnungsstellung der Heckklappe (4) detektiert, der Heckklappenaktuator (6) vom Hydraulikmodul (8) nicht weiter angetrieben jedoch abhängig hiervon der Entladeeinrichtungsaktuator (7) vom Hydraulikmodul (8) angetrieben wird, sofern ein Drehzahlsensor (24) eine definierte Drehzahl von im Heckbereich des Laderaums (2) angeordneten Dosierwalzen (22) detektiert.

9. Verfahren zum Betreiben eines Transportwagens nach einem der Ansprüche 1 bis 7, **dadurch gekennzeichnet, dass** dann, wenn bei geöffneter Heccklappe (4) ein Entladevorgang beendet wird,
zunächst der Entladeeinrichtungsaktuator (7) stillgesetzt wird,
anschließend die Heckklappe (4) dadurch geschlossen wird, dass bei noch hydraulisch verriegelter Heckklappe (4) an dem Heckklappenaktuator (6) ein Druck aufgebaut wird, bis ein Druckbegrenzungsventil (17) öffnet, hierdurch die Heckklappe (4) in Schließrichtung aus der definierten Öffnungsposition heraus verlagert und abhängig vom Heckklappensensor (9) das Hydraulikmodul (8) die Heckklappe (4) entriegelt.

10. Verfahren nach Anspruch 9, **dadurch gekennzeichnet, dass** dasselbe im Anschluss an das Verfahren nach Anspruch 8 ausgeführt wird.

11. Verfahren zum Betreiben eines Transportwagens nach Anspruch 6, **dadurch gekennzeichnet, dass** zur Umkehrung einer Bewegungsrichtung der Entladeeinrichtung (5) die Reversiereinrichtung (18) betätigt wird, wobei hierbei die Heckklappe (4) hydraulisch verriegelt bleibt und der Entladeeinrichtungsaktuator (7) unter Umkehrung der Bewegungsrichtung der Entladeeinrichtung (5) angetrieben wird.

12. Verfahren nach Anspruch 11, **dadurch gekennzeichnet, dass** dasselbe im Zusammenhang mit dem Verfahren nach Anspruch 8 dann ausgeführt wird, wenn eine Blockade der Dosierwalzen (22) detektiert wird.

## Claims

1. Agricultural transport vehicle (1),
with a load compartment (2),
with a tailgate (4) positioned at a rear region of the load compartment (2), and with a hydraulic tailgate actuator (6) for moving the tailgate (4),
with an unloading device (5) designed in particular as a scraper floor or retractable floor or push unit, and with an unloading device actuator (7) for driving the unloading device (5),
with a hydraulic module (8) shared by the tailgate actuator (6) and the unloading device actuator (7), and a tailgate sensor (9), depending on which the unloading device actuator (7) of the unloading device (5) can be operated in such a manner that the unloading device actuator (7) can be driven by the hydraulic module (8) whenever the tailgate sensor (9) detects a defined opening position of the tailgate (4),
**characterized in that** metering rollers (22) are arranged in the rear region of the load compartment (2), **in that** a rotational speed sensor (24) monitors the rotational speed of the metering rollers (22), and **in that** the unloading device actuator (7) can be activated by the hydraulic module (8) in such a manner that the unloading device actuator (7) can be driven whenever the tailgate sensor (9) detects the defined opening position of the tailgate (4) and whenever, furthermore, the rotational speed sensor (24) detects a defined rotational speed of the metering rollers (22).

2. Transport vehicle according to Claim 1, **characterized in that** the hydraulic module (8) shared by the tailgate actuator (4) of the tailgate (4) and the unloading device actuator (7) of the unloading device (5) can be coupled via hydraulic lines (10a, 10b) to a double-action control device of a tractor.

3. Transport vehicle according to either of Claims 1 or 2, **characterized in that** the tailgate actuator (6) and the unloading device actuator (7) are both coupled via corresponding hydraulic lines (11a, 11b, 12a, 12b) to the joint hydraulic module (8).

4. Transport vehicle according to one of Claims 1 to 3, **characterized in that** the unloading device actuator (7) can be driven exclusively by the hydraulic module (8) whenever the tailgate sensor (9) detects the defined opening position of the tailgate (4), and **in that** the tailgate actuator (6) can be driven exclusively by the hydraulic module (8) whenever the tailgate sensor (9) does not detect the defined opening position of the tailgate (4).

5. Transport vehicle according to one of Claims 1 to 4, **characterized in that** whenever the tailgate sensor (9) detects the defined opening position of the tailgate (4), the hydraulic module (8) hydraulically locks the tailgate actuator (4) and therefore the tailgate (4), and **in that** whenever the tailgate sensor (9) does not detect the defined opening position of the tailgate (4), the hydraulic module (8) hydraulically unlocks the tailgate actuator (6) and therefore the tailgate (4).

6. Transport vehicle according to one of Claims 1 to 5, **characterized by** a reversing device (18) for reversing a direction of movement of the unloading device (5).

7. Transport vehicle according to one of the preceding claims, **characterized in that** the tailgate sensor (9) is configured or arranged in such a manner that the opening angle of the tailgate (4) can be adjusted.

8. Method for operating a transport vehicle (1) according to one of Claims 1 to 7, **characterized in that** whenever an unloading operation is triggered when the tailgate (4) is closed,
first of all the tailgate actuator (6) is driven by the hydraulic module (8) to open the tailgate (4), whereas the unloading device actuator (7) is not driven by the hydraulic module (8),
whenever the tailgate sensor (9) detects a defined opening position of the tailgate (4), the tailgate actuator (6) is not driven further by the hydraulic module (8), but, depending thereon, the unloading device actuator (7) is driven by the hydraulic module (8) if a rotational speed sensor (24) detects a defined rotational speed of metering rollers (22) arranged in the rear region of the load compartment (2).

9. Method for operating a transport vehicle according to one of Claims 1 to 7, **characterized in that** whenever an unloading operation is ended when the tailgate (4) is open,
first of all the unloading device actuator (7) is shut down,
then the tailgate (4) is closed by the fact that, when the tailgate (4) is still hydraulically locked, a pressure is built up at the tailgate actuator (6) until a pressure-limiting valve (17) opens, when the tailgate (4) is thereby shifted out of the defined opening position in the closing direction and, depending on the tailgate sensor (9), the hydraulic module (8) unlocks the tailgate (4).

10. Method according to Claim 9, **characterized in that** the same is carried out following the method according to Claim 8.

11. Method for operating a transport vehicle according to Claim 6, **characterized in that** the reversing device (18) is actuated in order to reverse a direction of movement of the unloading device (5), wherein, in this case, the tailgate (4) remains hydraulically locked and the unloading device actuator (7) is driven with the direction of movement of the unloading device (5) being reversed.

12. Method according to Claim 11, **characterized in that** the same is carried out in junction with the method according to Claim 8 whenever a blockage of the metering rollers (22) is detected.

## Revendications

1. Remorque de transport agricole (1), comprenant un espace de chargement (2),
un hayon (4) positionné dans une zone arrière de l'espace de chargement (2) et un actionneur de hayon hydraulique (6) pour régler le hayon (4),
un dispositif de déchargement (5), réalisé en particulier sous la forme d'un fond mouvant ou d'un fond roulant ou d'un pousseur, et un actionneur de dispositif de déchargement (7) pour entraîner le dispositif de déchargement (5),
un module hydraulique (8) commun à l'actionneur de hayon (6) et à l'actionneur de dispositif de déchargement (7), et un capteur de hayon (9) en fonction duquel l'actionneur de dispositif de déchargement (7) du dispositif de déchargement (5) peut être exploité de telle sorte que l'actionneur de dispositif de déchargement (7) peut être entraîné par le module hydraulique (8) lorsque le capteur de hayon (9) détecte une position d'ouverture définie du hayon (4), **caractérisée en ce que** dans la zone arrière de l'espace de chargement (2), des rouleaux de dosage (22) sont disposés, **en ce qu'**un capteur de vitesse de rotation (24) surveille la vitesse de rotation des rouleaux de dosage (22), et **en ce que** l'actionneur de dispositif de déchargement (7) peut être piloté par le module hydraulique (8) de telle sorte que l'actionneur de dispositif de déchargement (7) peut être entraîné si le capteur de hayon (9) détecte la position d'ouverture définie du hayon (4), et si le capteur de vitesse de rotation (24) détecte en outre une vitesse de rotation définie des rouleaux de dosage (22).

2. Remorque de transport selon la revendication 1, **caractérisée en ce que** le module hydraulique (8) commun à l'actionneur de hayon (4) du hayon (4) et à l'actionneur de dispositif de déchargement (7) du dispositif de déchargement (5) peut être couplé par des conduites hydrauliques (10a, 10b) à un appareil de commande à double effet d'un véhicule tracteur.

3. Remorque de transport selon l'une quelconque des revendications 1 à 2, **caractérisée en ce que** l'actionneur de hayon (6) et l'actionneur de dispositif de déchargement (7) sont tous les deux couplés au module hydraulique commun (8) par des conduites hydrauliques (11a, 11b, 12a, 12b) correspondantes.

4. Remorque de transport selon l'une quelconque des revendications 1 à 3, **caractérisée en ce que** l'actionneur de dispositif de déchargement (7) peut être entraîné par le module hydraulique (8) uniquement si le capteur de hayon (9) détecte la position d'ouverture définie du hayon (4), et **en ce que** l'actionneur de hayon (6) peut être entraîné par le module hydraulique (8) uniquement si le capteur de hayon (9) ne détecte pas la position d'ouverture définie du hayon (4).

5. Remorque de transport selon l'une quelconque des revendications 1 à 4, **caractérisée en ce que** si le capteur de hayon (9) détecte la position d'ouverture définie du hayon (4), le module hydraulique (8) verrouille hydrauliquement l'actionneur de hayon (4) et donc le hayon (4), et **en ce que**, si le capteur de hayon (9) ne détecte pas la position d'ouverture définie du hayon (4), le module hydraulique (8) déverrouille hydrauliquement l'actionneur de hayon (6) et donc le hayon (4).

6. Remorque de transport selon l'une quelconque des revendications 1 à 5, **caractérisée par** un dispositif de renversement (18) pour inverser une direction de mouvement du dispositif de déchargement (5).

7. Remorque de transport selon l'une quelconque des revendications précédentes, **caractérisée en ce que** le capteur de hayon (9) est configuré ou disposé de telle sorte que l'angle d'ouverture du hayon (4) est réglable.

8. Procédé d'exploitation d'une remorque de transport (1) selon l'une quelconque des revendications 1 à 7, **caractérisé en ce que**, si une opération de déchargement est déclenchée lorsque le hayon (4) est fermé,
d'abord l'actionneur de hayon (6) est entraîné par le module hydraulique (8) pour ouvrir le hayon (4), alors que l'actionneur de dispositif de déchargement (7) n'est pas entraîné par le module hydraulique (8),
si le capteur de hayon (9) détecte une position d'ouverture définie du hayon (4), l'actionneur de hayon (6) n'est plus entraîné par le module hydraulique (8), mais indépendamment de cela, l'actionneur de dispositif de déchargement (7) est entraîné par le module hydraulique (8) dans la mesure où un capteur de vitesse de rotation (24) détecte une vitesse de rotation définie des rouleaux de dosage (22) disposés dans la zone arrière de l'espace de chargement (2).

9. Procédé d'exploitation d'une remorque de transport selon l'une quelconque des revendications 1 à 7, **caractérisé en ce que**, si une opération de déchargement est terminée alors que le hayon (4) est ouvert,
d'abord l'actionneur de dispositif de déchargement (7) est arrêté,
ensuite le hayon (4) est fermé **en ce qu'**une pression est établie au niveau de l'actionneur de hayon (6) alors que le hayon (4) est toujours verrouillé hydrauliquement, jusqu'à ce qu'une soupape de limitation de pression (17) s'ouvre, sortant ainsi le hayon (4) de la position d'ouverture définie dans la direction de fermeture, et le module hydraulique (8) déverrouille le hayon (4) en fonction du capteur de hayon (9).

10. Procédé selon la revendication 9, **caractérisé en ce que** la même étape est exécutée suite au procédé selon la revendication 8.

11. Procédé d'exploitation d'une remorque de transport selon la revendication 6, **caractérisé en ce que** pour l'inversion d'une direction de mouvement du dispositif de déchargement (5), le dispositif de renversement (18) est actionné, le hayon (4) restant alors verrouillé hydrauliquement, et l'actionneur de dispositif de déchargement (7) étant entraîné en inversant la direction de mouvement du dispositif de déchargement (5).

12. Procédé selon la revendication 11, **caractérisé en ce que** la même étape est exécutée en relation avec le procédé selon la revendication 8 si un blocage des rouleaux de dosage (22) est détecté.
